Europäisches Patentamt

European Patent Office

Office européen des brevets

(19)

(11) Numéro de publication: **0 072 282**
**A1**

## (12) DEMANDE DE BREVET EUROPEEN

(21) Numéro de dépôt: **82401375.9**

(22) Date de dépôt: **23.07.82**

(51) Int. Cl.³: **B 27 B 19/09,** B 23 D 51/14

(30) Priorité: **31.07.81 FR 8114932**

(43) Date de publication de la demande: **16.02.83**
**Bulletin 83/7**

(84) Etats contractants désignés: **AT BE CH DE FR GB IT LI LU NL SE**

(71) Demandeur: **Peugeot Outillage Electrique, Société dite:, 66/78 avenue François Arago, F-92000 Nanterre (FR)**

(72) Inventeur: **Baudry, Claude, 6 Avenue Lamartime, F-95400 Arnouvelle Les Gonesse (FR)**

(74) Mandataire: **Bressand, Georges et al, c/o CABINET LAVOIX 2 Place d'Estienne d'Orves, F-75441 Paris Cedex 09 (FR)**

(54) Scie sauteuse.

(57) Cette scie sauteuse comporte des moyens de montage (MM) de la lame (7) permettant de monter celle-ci dans deux positions perpendiculaires l'une pour le travail normal et l'autre pour le travail en arasage.

Le porte-outil (6) de cette scie est placé très près de la paroi avant (P) du carter de la scie. A cet effet, le mécanisme d'excentrique (5) comporte un pignon intermédiaire (27) monté en porte-à-faux sur une broche (31) fixée dans le carter.

EP 0 072 282 A1

Scie sauteuse.-

La présente invention est relative aux machines-outils à main comportant un carter, dans lequel est logé un mécanisme d'entraînement, qui est destiné à imprimer un mouvement de va-et-vient à un outil de coupe tel qu'une lame de scie. Plus particulièrement l'invention concerne les machines-outils à main appelés communément "scies sauteuses".

Les scies sauteuses classiques ne permettent pas un travail de coupe parallèlement à une surface, lorsque le trait de coupe se trouve très près de celle-ci. Par exemple, lorsqu'on désire ajuster le bas d'une porte, il est nécessaire d'enlever celle-ci de ses gonds alors qu'il serait souhaitable de pouvoir faire ce travail quand la porte se trouve montée. Une autre opération de coupe dite "d'arasage" ne peut être effectuée avec les scies sauteuses classiques en raison de leur encombrement latéral. Par exemple, si un tube émergeant du sol doit être coupé au ras de celui-ci, la scie sauteuse n'est pas appropriée pour le faire.

On a déjà tenté de perfectionner les scies sauteuses de manière à les rendre aptes à effectuer le travail d'arasage. C'est ainsi que l'on décrit dans le US 3. 496.972, une scie du type "sabre" dans laquelle est logé un mécanisme d'entraînement destiné à imprimer un mouvement de va-et-vient à l'outil de découpage au moyen d'un excentrique. Ce dernier coopère avec un organe d'accouplement à l'extrêmité duquel est fixé un porte-outil pourvu lui-même à son extrêmité libre d'un collier agencé pour permettre le montage de l'outil dans deux positions perpendiculaires, l'une pour le travail normal et l'autre pour le travail d'arasage.

L'excentrique qui entraîne l'organe d'accouplement est monté sur une broche qui traverse une cavité avant ménagée dans le carter et qui est montée à rotation dans des paliers. L'un de ces paliers est dispo-

2

sé dans un renflement de la face avant du carter délimitant ladite cavité à cet endroit. La broche porte également un pignon intermédiaire séparé de l'excentrique et engrénant avec l'extrêmité dentée de l'arbre d'un moteur électrique d'entraînement.

Il est souhaitable d'une façon générale qu'un travail de coupe en arasage puisse se faire aussi près que possible par rapport à la surface de laquelle dépasse la partie à couper d'un ouvrage. En d'autres termes, dans sa position d'arasage, la lame de coupe doit se trouver aussi près que possible du plan défini par la face de la machine-outil qui vient glisser sur ladite surface.

Dans le US 3.496.972, pour obtenir ce résultat, le collier de fixation de la lame de scie comporte à cet effet une face d'appui spéciale qui est décalée d'une distance importante par rapport à l'axe défini par l'alignement du porte-outil et de l'organe d'accouplement.

Ce décalage important est nécessaire en raison du montage de l'excentrique dont la broche est montée dans un palier qui se trouve entre cet excentrique et la face d'appui de la machine.

Or, ce décalage impose un couple important au niveau de la fixation de l'outil qui se trouve bien situé dans le plan de la face d'appui du carter mais qui est déporté par rapport à la direction selon laquelle s'exercent les forces d'entraînement, direction qui coïncide avec l'axe mentionné ci-dessus.

Un autre inconvénient de cette machine connue réside dans le fait que les moyens de fixation de l'outil sont formés par un collier dont la section de passage intérieur est choisie de telle façon que lors du démontage, l'outil puisse être dégagé d'une goupille de blocage fixée latéralement dans le porte-outil. Le collier ne peut ainsi être protégé par le carter dans lequel, dans ces conditions, il faudrait prévoir un expace suffisant pour la manipulation du collier, ce qui augmenterait considérablement l'encombrement latéral du carter.

L'invention a pour but de fournir une machine de ce type ne présentant pas les inconvénients de la technique antérieure.

L'invention a donc pour objet une machine du type indiqué ci-dessus, pourvue d'un outil de découpage, notamment une scie sauteuse comprenant un carter dans lequel est logé un mécanisme d'entraînement destiné à imprimer un mouvement de va-et-vient à l'outil de découpage, tel qu'une lame de scie par exemple, au moyen d'un excentrique et d'un porte-outil logé dans une cavité ménagée dans ce carter, la machine étant en outre pourvue de moyens pour fixer l'outil sur le porte-outil dans deux positions perpendiculaires de travail l'une pour le travail normal et l'autre pour le travail d'arasage, cette machine étant caractérisée en ce que le porte-outil est formé par une lame plate montée coulissante dans la cavité du carter en étant directement guidée dans celui-ci immédiatement derrière la face avant de cette cavité, en ce que le porte-outil porte à son extrémité inférieure lesdits moyens de fixation de l'outil et est couplée mécaniquement près de son autre extrémité avec un pignon intermédiaire du mécanisme d'entraînement par l'intermédiaire de l'excentrique et en ce que ce pignon intermédiaire est monté à rotation sur une partie en porte-à-faux d'une broche reçue dans le carter et s'étendant dans ladite cavité perpendiculairement audit porte-outil.

Ainsi, le travail de découpe avec progression latérale de l'outil par rapport au carter de la machine-outil (travail d'arasage), peut se faire au ras

4

d'une surface sur laquelle vient alors s'appliquer la face d'appui du carter, sans que la lame de coupe soit déportée dans une mesure importante par rapport à l'axe selon lequel s'exercent sur cette lame les forces d'entraînement.

L'invention sera mieux comprise à l'aide de la description qui va suivre de deux modes de réalisation de l'invention, et qui est faite à l'aide des dessins annexés, donnés uniquement à titre d'exemple et sur lesquels :

- la Fig. 1 est une vue partielle en élévation latérale, d'une scie sauteuse suivant l'invention, l'outil de découpage étant placé dans la position dans laquelle la scie progresse latéralement au cours du travail;

- la Fig. 2 est une vue en élévation frontale de la scie sauteuse représentée sur la Fig. 1;

- la Fig. 3 est une vue en élévation schématique des moyens qui dans cette scie permettent le montage de l'outil de découpage sur le porte-outil;

- la Fig. 4 est une vue analogue à celle de la Fig. 3 mais montrant l'outil de découpage dans l'autre position de travail;

- les Fig. 5 et 6 représentent par des vues respectivement analogues aux Fig. 3 et 4, un autre mode de réalisation des moyens de fixation de l'outil de découpage.

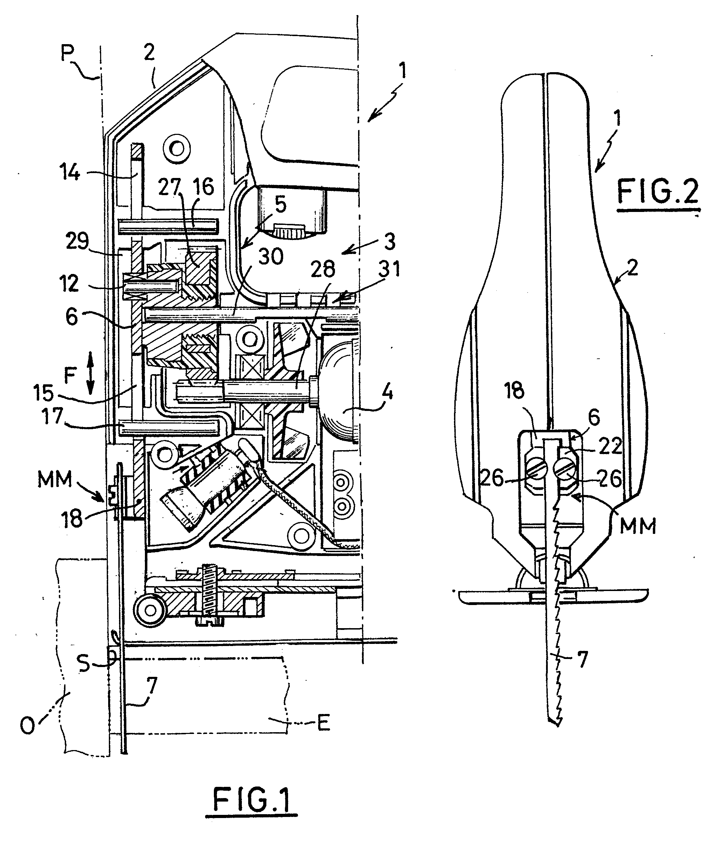

La scie sauteuse 1 représentée sur la Fig. 1 comprend un carter 2 dans lequel est logé un mécanisme d'entraînement 3 comprenant notamment un moteur électrique 4 qui par l'intermédiaire d'un mécanisme d'excentrique 5 entraîne un porte-outil 6 auquel est fixé un outil de découpage 7 tel qu'une lame de scie. Ainsi le porte-outil 6 se déplace selon un mouvement de va-et-vient longitudinal dans le sens de la flèche F de la Fig. 1.

0072282

5

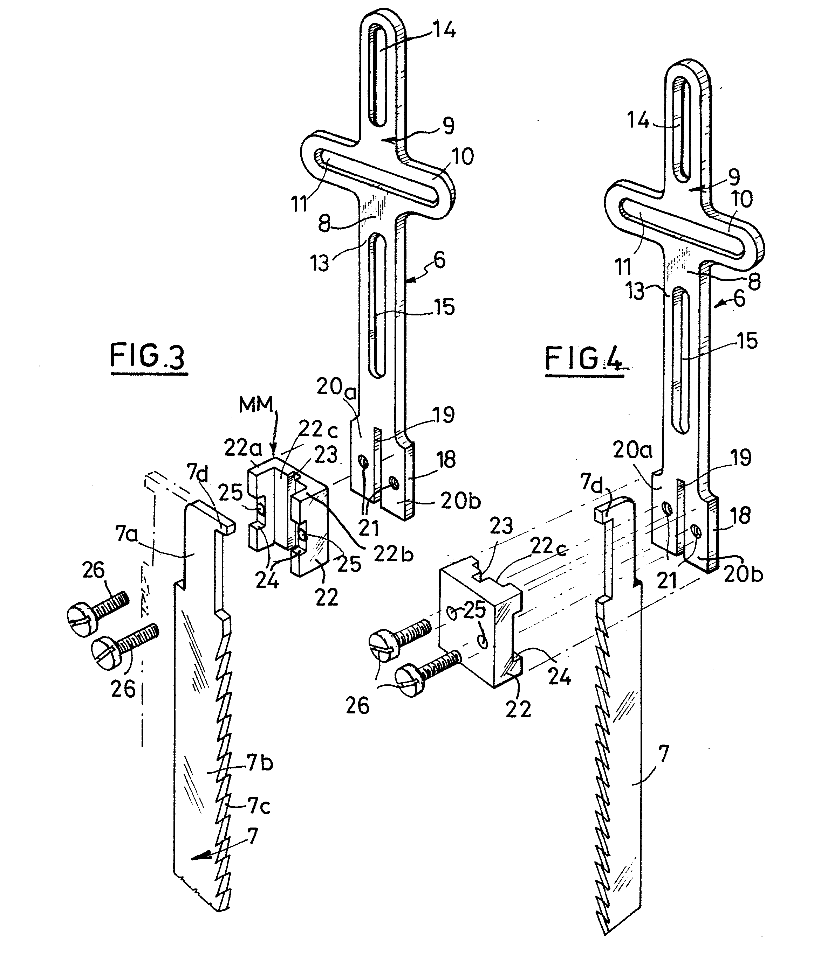

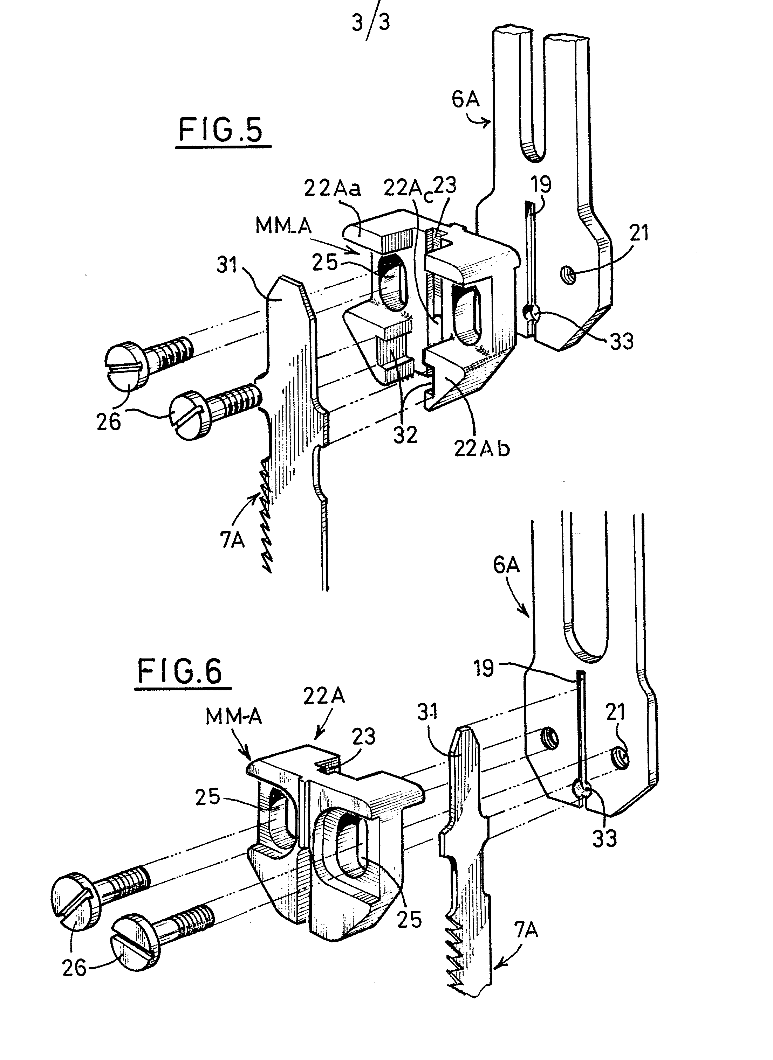

Le porte-outil 6 (Fig. 3 et 4) se présente sous la forme d'une lame plate 8 présentant un croisillon 9 dans la branche transversale 10 duquel est prévu une lumière 11. Dans cette lumière est engagé un doigt 12 formant excentrique du mécanisme d'entraînement 3. La branche longitudinale 13 du croisillon présente deux lumières longitudinales 14 et 15 dans lesquelles pénètrent respectivement des doigts de guidage fixes 16 et 17 destinés à guider le mouvement de va-et-vient longitudinal du croisillon 9. A son extrêmité inférieure, le croisillon 9 est pourvu d'un talon de montage 18 dans lequel est prévu une rainure longitudinale 19 délimitant sur ce talon deux surfaces d'appui 20a et 20b traversées chacune par un trou fileté 21. Le talon 18 fait partie des moyens de montage MM de l'outil 7, ces moyens comprenant en outre un bloc de montage 22 qui se présente dans cette variante sous la forme générale d'un étrier, dont le fond présente une rainure 23 parallèle aux ailes 22a et 22b de cet étrier. Chacune de ces ailes présente, en outre, une encoche 24 et elles sont traversées par des trous respectifs 25 qui dans la position montée de l'étrier 22, coïncident avec les trous 21 ménagés dans le talon 18 du porte-outil 6. Des vis 26 sont destinées à fixer le bloc de montage 22 sur le talon 18 du porte-outil.

L'outil de découpage 7 est constitué par exemple par une lame de forme classique et dont la patte de montage 7a est d'un premier type standard dans lequel elle présente une largeur légèrement inférieure à la lame 7b proprement dite, comportant le bord tranchant 7c pourvu d'une denture.

En outre, cette patte de montage 7a comporte un ergot 7d destiné à immobiliser longitudinalement la lame dans sa position montée.

Le bloc de montage 22 délimite entre ses

6

ailes 22a et 22b un évidement 22c dont la largeur est à peu près égale à la largeur de la patte de montage 7a de la lame et lorsque le bloc de montage 22 est positionné conformément à la Fig. 4, la profondeur de la rainure 23 augmentée de la hauteur des ailes 22a et 22b ainsi que de la profondeur de la rainure 19 pratiquée dans le talon 18 du porte-outil 6, est également égale à la largeur de la partie de montage 7a de la lame 7.

On comprend d'après les Fig. 3 et 4 que la lame 7 peut être montée dans la position de découpage latéral (Fig. 3) et dans la position de travail classique dans laquelle la scie progresse vers l'avant. On voit que dans la position de la Fig.3, la face extérieure du fond du bloc de montage 22 est appliquée contre les surfaces d'appui 20a et 20b du talon 18, et que les vis 26 maintiennent la patte de montage 7a de la lame 7 entre les ailes de l'étrier 22. Bien entendu, la lame peut être montée de manière à présenter le tranchant 7c à droite ou à gauche par rapport au carter de la scie.

En revanche, lorsque la lame 7 doit être placée dans la position de travail classique, le bloc de montage 22 est inversé en présentant la face intérieure de son fond contre les surfaces d'appui 20a et 20b du talon 18 du porte-outil 6. Dans ces conditions, la patte de montage 7a de la lame est emprisonnée dans les rainures 19 et 23, le bloc de montage 22 étant immobilisé par les vis 26.

Le mécanisme d'excentrique 5 qui comprend l'excentrique 12 (Fig.1) est couplé à un pignon intermédiaire 27 engrénant avec l'extrêmité dentée de l'arbre 28 du moteur électrique 4.

Dans le carter 2 est délimité à l'avant une cavité 29 dans laquelle sont logés le mécanisme à excentrique 5, le porte-outil 6 (dont une partie constitue d'ailleurs le mécanisme 5) et le pignon intermédiaire 27. Cette cavité 29 est délimitée à l'avant par la paroi avant du carter 2 et le porte-outil se trouve situé immédiatement derrière cette paroi avant grâce au fait qu'aucun organe mécanique n'est placé entre elle et le porte-outil. Pour obtenir cette disposition avantageuse, le pignon intermédiaire est monté rotatif autour de la partie en porte-à-faux 30 d'une broche 31 fixée dans le carter, cette partie en porte-à-faux s'étendant dans la cavité 29 transversalement au porte-outil 6 jusqu'au voisinage immédiat de celui-ci.

Il en résulte que dans la position d'arasage (Fig. 1 et 3), la lame 7 peut pratiquement être montée dans le plan P sans qu'il en résulte un décalage important par rapport au plan dans lequel se déplace le porte-outil 6.

Par ailleurs, il apparaît clairement sur les Fig. 1et 2 que la face frontale 27 du carter 2 de la scie 1 ne présente aucune aspérité au-delà d'un plan P défini par cette face. L'outil de découpage ou lame 7 se trouve donc situé très près de ce plan de sorte qu'un travail d'arasage, par rapport à une surface S d'une pièce 0 contre laquelle est appuyé la face frontale de ce carter, peut donc facilement être effectué par exemple pour séparer un élément E de cette pièce 0.

Le changement de position de la lame est commode et ne nécessite que le dévissage des vis 26, le retournement du bloc de montage 22 et après le positionnement correct de la lame 7, le revissage des vis 26.

Les Fig. 5 et 6 montrent une variante MM-A des moyens de montage de l'outil de coupe. Ce dernier comporte une lame 7A dont la patte de montage 31 est

8

d'un second type standard connu. Cette patte présente une forme en croix.

L'étrier 22A de ce mode de réalisation comporte pour bloquer la lame longitudinalement et latérale- dans la position d'arasage des encoches 32 pratiquées respectivement dans les ailes 22A-a et 22A-b de l'étrier. En outre, le talon 18A du porte-outil 6A est pourvu d'un trou central 33 dans lequel vient pénétrer l'une des branches transversales de la patte de montage 31 dans la position de travail normal de la scie.

L'invention n'est pas limitée aux modes de réalisation décrits ci-dessus et représentés sur les Fig. En effet, elle s'applique également dans le cas où l'on utilise des lames dont la fixation est réalisée à l'aide de simples vis traversant des trous pratiqués dans la patte de fixation de la lame. Dans ce cas, le porte-outil peut comporter de simples méplats sur lesquels la lame vient s'appliquer dans l'une ou l'autre de ses positions, ces méplats étant équivalents aux logements formés par le bloc de montage 22 et la rainure 19 du mode de réalisation des Fig. 1 à 4.

9

REVENDICATIONS

1. Scie sauteuse comprenant un carter (2) dans lequel est logé un mécanisme d'entraînement (3) destiné à imprimer un mouvement de va-et-vient à l'outil de découpage (7; 7A), tel qu'une lame de scie par exemple, au moyen d'un excentrique (12) et d'un porte-outil (6, 6A) logé dans une cavité (29) ménagée dans ce carter, la machine étant en outre pourvue de moyens (MM, MM-A) pour fixer l'outil sur le porte-outil dans deux positions perpendiculaires de travail, l'une pour le travail normal et l'autre pour le travail en arasage, cette machine étant caractérisée en ce que le porte-outil (6, 6A) est formé par une lame plate montée coulissante dans la cavité (29) du carter en étant directement guidée dans celui-ci immédiatement derrière la face avant de cette cavité, en ce que le porte-outil porte à son extrêmité inférieure lesdits moyens de fixation (MM, MM-A) de l'outil et est couplée mécaniquement près de son autre extrêmité avec un pignon intermédiaire (27) du mécanisme d'entraînement par l'intermédiaire de l'excentrique (12) et en ce que ce pignon intermédiaire (27) est monté à rotation sur une partie en porte-à-faux (30) d'une broche (31) reçue dans le carter (2) et s'étendant dans ladite cavité (29) perpendiculairement audit porte-outil (6; 6A).

2. Machine suivant la revendication 1, caractérisé en ce que lesdits moyens de montage (MM, MM-A) comprennent un organe de fixation amovible (22, 22A) adapté pour être rendu solidaire du porte-outil (6, 6A) et délimitant avec l'extrêmité inférieure du porte-outil deux logements (19, 23, 22c; 32, 33) dans lesquels l'outil (7; 7A) peut être reçu respectivement dans l'une et l'autre de ces positions.

3. Machine suivant la revendication 2 dans laquelle l'outil (7; 7A) est une lame de scie comportant

10

à son extrêmité de fixation des moyens de blocage longitudinal, caractérisée en ce que lesdits logements sont délimités par une fente longitudinale (19) de l'extrêmité inférieure du porte-outil (6; 6A) et par une rainure (23) ménagée dans ledit organe de fixation (22; 22A) et d'autre part par un évidement perpendiculaire (22c; 22A-c) ménagé dans cet organe de fixation, chaucun desdits logements présentant une section transversale égale à celle de la portion de fixation de ladite lame (7; 7A).

4. Machine suivant la revendication 3, caractérisée en ce que ledit organe de fixation se présente sous la forme d'un étrier (22; 22A) entre les ailes duquel est délimité ledit évidement (22c; 22A-c) qui comporte dans son fond ladite rainure (23) et en ce que des trous (25) sont pratiqués de part et d'autre dudit évidement dans les ailes de l'étrier pour laisser passage à des vis de fixation (26) destinées à être bloquées dans des trous taraudés (21) ménagés dans ledit porte-outil de part et d'autre de la fente (19) pratiquée dans celui-ci.

5. Machine suivant la revendication 4, caractérisée en ce que, pour assurer le positionnement de l'outil (7; 7A) dans l'une ou l'autre desdites positions ledit étrier (22; 22A) est appliqué contre ledit porte-outil (6; 6A), respectivement dans des positions inverses.

FIG.1

FIG.2

FIG.3

FIG.4

## FIG.5

## FIG.6

Office européen
des brevets

**RAPPORT DE RECHERCHE EUROPEENNE**

Numéro de la demande

EP 82 40 1375

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 27 B 19/09 |
| X | US-A-3 360 021 (MEJIA) <br> * Colonne 3, lignes 6-60 * | 1,2 | B 23 D 51/14 |
| | --- | | |
| A | US-A-3 270 369 (MANDELL) <br> * Colonne 3, lignes 11-18 * | 4,5 | |
| | --- | | |
| A | US-A-3 412 767 (GREEN) | | |
| | --- | | |
| A | US-A-2 735 685 (KARR) | | |
| | --- | | |
| A | FR-A-1 124 672 (CHAMPION) | | |
| | --- | | **DOMAINES TECHNIQUES RECHERCHES (Int. Cl. ³)** |
| A | US-A-3 547 166 (DUDEK) | | |
| | --- | | B 27 B 19/00 |
| A | US-A-3 028 890 (ATKINSON) | | B 23 D 51/00 |
| | --- | | |
| A | FR-A-2 111 023 (MURPHY) | | |
| | --- | | |
| A | FR-A- 933 625 (ETAT) | | |
| | ----- | | |

Le présent rapport de recherche a été établi pour toutes les revendications

| Lieu de la recherche | Date d'achèvement de la recherche | Examinateur |
|---|---|---|
| LA HAYE | 15-08-1982 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    & : membre de la même famille, document correspondant

OEB Form 1503. 03.82